(19) Europäisches Patentamt
European Patent Office
Office européen des brevets

(11) **EP 2 993 816 A1**

(12) **EUROPEAN PATENT APPLICATION**

(43) Date of publication:
**09.03.2016 Bulletin 2016/10**

(51) Int Cl.:
**H04J 3/06** [(2006.01)]   **H04L 12/40** [(2006.01)]

(21) Application number: **14306357.6**

(22) Date of filing: **03.09.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventor: **Chanet, Dominique**
**9310 Aalst (BE)**

(74) Representative: **Schäferjohann, Volker**
**Deutsche Thomson OHG**
**European Patent Operations**
**Karl-Wiechert-Allee 74**
**30625 Hannover (DE)**

(54) **Method for exchanging messages in a network system, and apparatus adapted for use in the method according to the invention**

(57) The invention relates to a method for exchanging messages in a network system, wherein the messages are tagged with time stamp information derived from the local clock (RTC) of the transmitting station (P1, P2). More in particular, the invention is concerned with translating the time stamp information received in a message from a transmitting station (P1, P2) into the clock domain of a receiving station (S3), wherein the receiving station (S3) has a separate local clock domain. The invention also relates to an apparatus adapted for use in the method according to the invention.

The invention discloses a simple, publish-subscribe based, algorithm that allows any device in the distributed system to determine an accurate estimation of two important time-related values: (a) the delta (difference) between its own local clock and that of any other device in the network system and (b) the average transmission time of messages between itself and any other device in the system.

The translation of a received time stamp into the clock domain of its own local clock (RTC) as well as the estimation of a transmission delay for delivering a message from a transmitting station (P1, P2) to a receiving station (S3) are based on the perceived clock delta times ($PD_{x->y}$) each station in the network publishes for a communication with another station in the network.

Fig. 3

EP 2 993 816 A1

**Description**

Technical Field

The invention relates to a method for exchanging messages in a network system, wherein the messages are tagged with time stamp information derived from the local clock of the transmitting station. The network system comprises a plurality of network stations which are connected to a communication bus. More in particular, the invention is concerned with translating the time stamp information received in a message from a transmitting station into the clock domain of a receiving station, wherein the receiving station has a separate local clock domain. The invention also relates to an apparatus adapted for use in the method according to the invention.

Background of the Invention

In a distributed system, many different software components, running on many different devices, continuously exchange data with one another. In a distributed system based on the publish-subscribe paradigm, there is an explicit decoupling between "producers" and "consumers" of information. Information flows unidirectionally from producer to consumer, and there is no synchronous coupling between the two that involves a consumer setting up an explicit connection with the producer and requesting said information. In such a system the information producers may be specialized downsized devices like sensors such as temperature and humidity sensors, window or door contacts for burglar protection, surveillance cameras, motor controls for sun protection devices, gates, etc., or appliances in the household like heating machines, refrigerators, air conditioning, or white goods like microwave ovens, washing machines, dish washer machines, drying machines or brown goods like consumer electronic devices, e.g. TV sets, DVD players, satellite receivers, personal computers, tablets, mobile phones Hifi equipment and the like. All such devices may be integrated in a home network which may be a mix of wired and wireless networks. Examples of wired networks are LAN technologies like Ethernet based on the IEEE 802.3xy Standard family or Powerline based on the standard ITU G.hn and an example of a wireless network is the WiFi technology based on the IEEE 802.11xy standard family.

In the home appliances as listed above, there are plenty of devices which are not equipped with a complete network protocol stack implementing all the seven layers from the ISO/OSI layer model of data communication. It may well be that some of the devices have only a network protocol stack with an implementation of the first two layers physical layer, and the data link layer. With such a rudimentary implementation of a network protocol stack, there is no possibility to synchronize the local clocks of the network stations to one reference clock in the network which has higher accuracy. For more sophisticated devices like work stations and PCs, there is the possibility to implement a protocol for synchronizing clocks. Such protocols for example are the Precision Time Protocol PTP according to the standard IEEE 1588 (IEEE = Institute of Electrical and Electronic Engineers) or the Network Time Protocol NTP based on the standard RFC 5905, which allow to synchronise the clocks with a precision of $10^{-9}$s.

Conclusively, distributed systems pose an interesting challenge when it comes to dealing with time-sensitive information that depends on "real" (wall-clock) time. It is basically impossible to guarantee that all devices that partake in the distributed system have a synchronized clock. Therefore, there exists no notion of a system-wide time on which all devices in the distributed system agree.

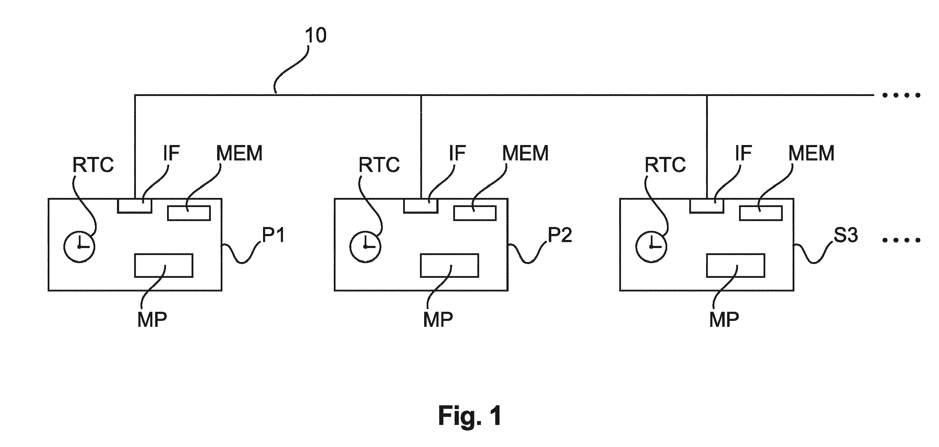

Fig. 1 shows a network with stations P1, P2, S3 and the communication bus 10. Communication bus 10 can e.g. be an Ethernet bus system, a Powerline bus system or a wireless LAN based on WIFI technology as mentioned above.

Current solutions require all participating devices in the distributed system to synchronize their clocks against a known third party time source (e.g. an NTP server). This is not always an option in Internet of Things-like scenarios: many "smaller" devices (sensors, network-connected speakers, etc.) will be explicitly barred from connecting to the Internet to mitigate security risks, and hence these devices cannot synchronize their clocks with a time server on the Internet.

From the US 8 630 316 B2 it is known a clock synchronization system using correlation events. Both stations in the network equipped with local clocks record log files of past events. The synchronization method relies on finding correlated events in the log files. The clock offset is determined with an algorithm that applies linear inequalities.

Invention

This invention aims to solve the following problems:

1. in a distributed system, where system clocks are not synchronized by some outside authority, there is a need for a way to reliably time-stamp pieces of data, or events, in such a way that a third-party observer can

   a) correctly reconstruct the temporal ordering of data or events tagged with time stamp information received from two or more parties in the distributed system and

b) correlate the time stamps correctly with its own system clock.

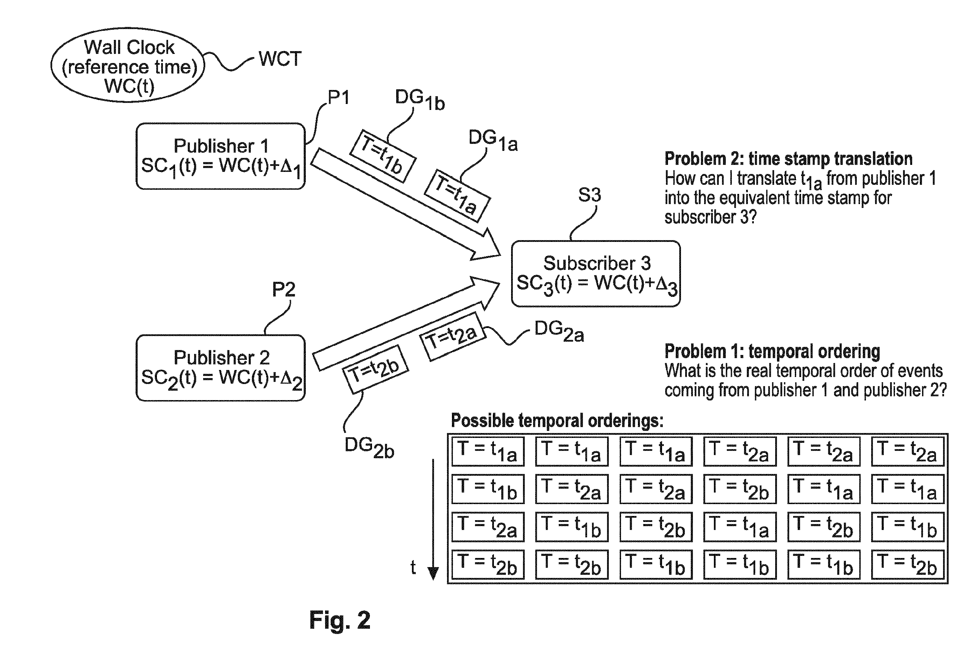

Fig. 2 illustrates this problem. A first network station P1 corresponds to a publisher of information and sends a piece of information in a message according to a network protocol, e.g. according to the well-known user datagram protocol UDP. Alternatively, it may be sent over transmission control protocol TCP/IP protocol. The message may be sent in unicast, multicast or broadcast mode. The second network station P2 is also a publisher of information. The third network station S3 is a subscriber to information sent from the publishers P1 and P2. Station S3 is thus a consumer of information in the sense of the invention. The pieces of information which the publishers submit can be anything which is listed in table 1 and the list is not limited. What is listed are only examples.

| Piece of Information | Examples |
| --- | --- |
| weather data | temperature, pressure, humidity, wind speed |
| lighting control and status data | lamp switched on / off; lamp dimmed to level x. |
| heating / air conditioning control and status data | heating adjusted to 21°c, ventilator at level 25. |
| door / gate control and status data | open / close garden gate |
| window shutter control and status data | open window shutter at 7 am, close window shutter at 10 pm. |
| CE device control | Adjust volume to level 12, Start/Stop play back of CD/DVD |
| network status data | log file information recorded in router / gateway. |

It may well be that the pieces of information listed in table 1 are tagged with time information. This may be done in the form of a time stamp generated in the station which is publishing the information based on its local clock. The time stamp then has a format of a real time / "wall clock time" like 09:36:30 UTC for a time code with resolution of seconds. Certainly, the time stamp may have a date included, also. The time resolution may be finer, e.g. in ms, $\mu$s or ns.

It is illustrated in Fig. 2 that the two stations P1 and P2 publish one piece of information each in a respective datagram $DG_{1a}$, $DG_{2a}$, with time stamps $T=t_{1a}$ and $T=t_{2a}$. There is also a second piece of information published from P1 and P2. The time stamps in the second datagrams $DG_{1b}$, $DG_{2b}$ are $T=t_{1b}$ and $T=t_{2b}$. All these datagrams are received in the subscriber station S3 and will be collected. Since the time stamps had been generated with the local clocks in the publishers P1 and P2, there is a problem to correctly order the received datagrams time wise with respect to the local clock in the subscriber station S3. As illustrated in the bottom part of Fig. 2, for the illustrated example there are 6 possible temporal orderings for the datagrams received at subscriber station S3. The wall clock time meaning the real time is indicated with reference sign WCT. As an assumption, none of the local clocks in the stations P1, P2 and S3 have the correct wall clock time. The local clock in publisher P1 has a deviation of $\Delta1$ and the local clocks in P2 and S3 have respective deviations $\Delta2$ and $\Delta3$.

There is a second problem which shall be solved with the invention:

2. in a distributed system, a way is needed to estimate the transmission delay between any two nodes in the system. E.g., if one node issues a request to another node to do something at a certain point in time, the sender has to be certain that point in time has not passed by the time the message arrives at its destination.

These problems are pertinent for a number of applications like

- applications that log events that happen in the system, and at a later time correlate events from multiple sources for analytics purposes (e.g. the Technicolor WiFi Doctor application)
- applications that rely on a synchronized clock for proper execution, e.g. synchronized media playback on different devices in the same house.

The object of the present invention is thus to propose a new method for exchanging messages in a network which allows the previously described problems to be solved. Appropriately designed receiving and transmitting stations are also at the focal point of the invention.

This object is achieved by a method having the features of Claim 1 and by an apparatus having the features according to Claim 9. Advantageous embodiments of the invention are defined in further claims.

The invention describes a simple, publish-subscribe based, method for exchanging messages with time stamp information that allows any device in the distributed system to determine an accurate estimation of two important time-related values: (a) the delta (difference) between its own clock and that of any other device in the system and (b) the average transmission time of messages between itself and any other device in the system.

If the clock delta between any two devices in the system can be accurately determined, the aforementioned problem of sharing time-sensitive information between participants in the distributed system is solved in the following manner: the producer of the information tags the information with a time stamp based on its own internal clock, and the consumer of the information translates this time stamp to its own understanding of time by adding the (known) clock delta between the two systems.

A method according the invention comprises the following method steps: The network stations in the network, periodically calculate the perceived clock delta times for its own local clock compared to the local clocks of the other network stations, and periodically communicate the perceived clock delta times in an update message to the other stations in the network. The network station which receives a message tagged with time stamp information, translates the time stamp information received in the message into the corresponding time stamp information in the clock domain of the receiving network station which has received the message based on the perceived clock delta time received in the latest update message from that network station. The fact that the stations periodically update the perceived clock delta times makes the system reliable against increasing deviations between system clocks of network stations due to clock skews. It is in this regard also advantageous that the update period is short, e.g. in the range of a minute.

It is further advantageous when the network stations also communicate the system clock time at the point in time the update message is being generated or sent to the other stations of the network in said update message and that the station receiving the update message also records the message arrival time for the incoming update messages. This allows for a simple calculation of the perceived clock delta time for the communication to the partner station in the own network station.

Such a simple calculation can be performed in the following manner: The network station calculates the perceived clock delta times for a communication with a network station x by selecting the last update message ($DG_x$) received from the network station x and calculating the perceived clock delta time according to the formula $PD_{x->y} = SC_y$ (message arrival time) - $SC_x$[as published in the received message], wherein $PD_{x->y}$ is the perceived clock delta time for said communication from network station x to network station y, $SC_y$(message arrival time) is the system clock time of station y at the arrival time of the update message received from network station x and $SC_x$[as published in the received message] is the system clock time of station x as published in the update message received from station x.

Furthermore, an estimated "true" clock delta time between the local clock of the transmitting station and the receiving station can be calculated in a simple manner according to the formula:

$$CD_{x->y} = (PD_{x->y} - PD_{y->x}) / 2$$

wherein $PD_{x->y}$ is the perceived clock delta time for said communication from network station x to network station y and $PD_{y\rightarrow x}$ is the in network station x perceived clock delta time for a communication to the network station x.

With the thus calculated estimated clock delta time it is easy to translate the time stamp information received in the message from a transmitting station x into the corresponding time stamp information in the clock domain of the receiving network station y using the formula:

$$SC_{x->y} = SC_x + CD_{x->y}$$

where $SC_{x->y}$ is the translated time stamp information into the clock domain of the receiving station y, $SC_x$ is the received time stamp value to be translated and $CD_{x->y}$ is the estimated true clock delta time between the clock in the transmitting station and the clock in the receiving station. Thus the correct temporal order of all the different events received in messages from the other stations in the network can be easily found out.

Still further an estimated transmission delay $TT_{x->y}$ for delivering a message from the transmitting station to the receiving station, is calculated in the transmitting station according to the formula:

$$TT_{x->y} = (PD_{x->y} + PD_{y->x}) / 2,$$

wherein $PD_{x\rightarrow y}$ is the perceived clock delta time for said communication from network station x to network station y and $PD_{y->x}$ is the in network station x perceived clock delta time for a communication from the network station y to the network station x.

Then the transmitting station sending a command to be executed by the receiving station at a command execution time which is indicated in the message performs an estimated late check before sending the message in the form of checking if the predetermined command execution time CET is greater than the current system clock time $SC_x$ of the transmitting station plus the estimated transmission delay $TT_{x\to y}$ for delivering a message from the transmitting station to the receiving station, wherein the sending of the command is approved in the estimated late check if it is determined that the command execution time is greater than the current system clock time $SC_x$ of the transmitting station plus the estimated transmission delay $TT_{x\to y}$, and wherein the sending of the command is disapproved in the estimated late check if it is determined that the command execution time is smaller or equal than the current system clock time $SC_x$ of the transmitting station plus the estimated transmission delay $TT_{x\to y}$. This procedure can advantageously be used to prevent the sending of control commands which are to be executed at a certain point in time, where due to the transmission delay for delivering the command via the network such a command cannot be delivered in timely fashion. The procedure therefore is a kind of forward error correction method.

The invention also concerns an apparatus that is adapted to be used in the method according to the invention. Such an apparatus is disclosed in the corresponding apparatus claims. The features listed in the apparatus claims have like advantages as the corresponding features listed in the set of method claims.

Further advantages and details of the invention are described below with reference to the appended drawings.

Brief Description of the Drawings:

In the drawings:

Figure 1 shows the overall structure of a network with a plurality of network stations and a linear communication bus;

Figure 2 illustrates the problem of the invention when two stations publish time stamped information and a third station consumes the time stamped information; and

Figure 3 shows the network system according to the invention in operation.

Detailed Description of the Invention

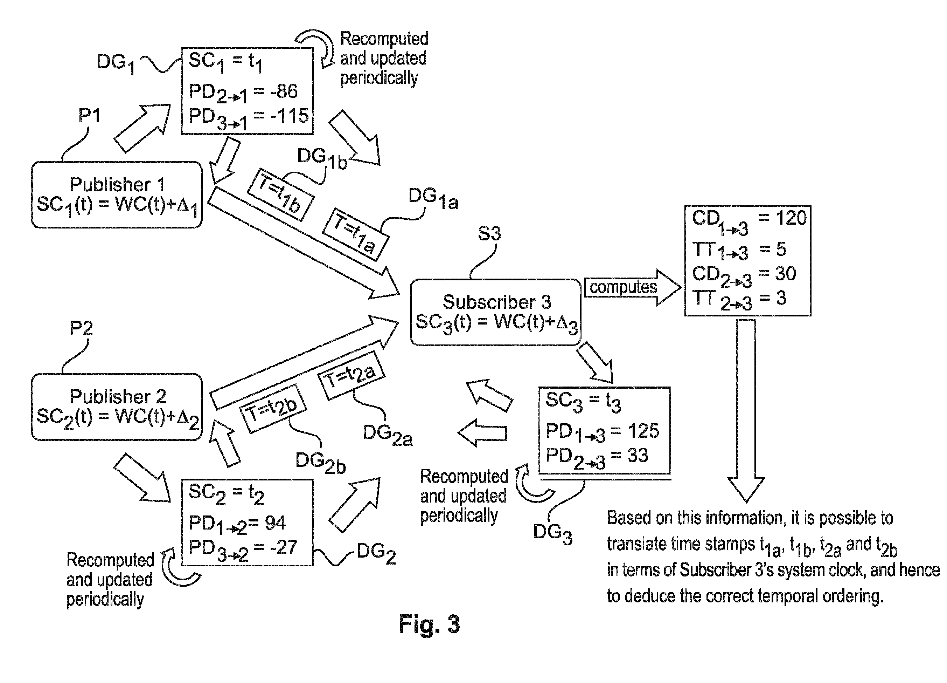

Fig. 3 shows the network system according to the invention in operation. Some reference signs are identical with the ones in Fig. 2. These reference signs denote like components as in Fig. 2 and will not be explained again. What is new in Fig. 3 is that the publishers P1 and P2 comprise a process that periodically updates the following information items:

The perceived system clock deltas between the own local clock and the local clocks of the other stations in the network and the current system clock value at the moment the station is updating the information about perceived system clock deltas. The station P1 publishes the perceived system clock delta $PD_{2\to 1}$ for the communication with station P2 and $PD_{3\to 1}$ for the communication with station S3 in a message. Also this message will be sent in a datagram $DG_1$. Station P1 also tags the message with the perceived system clock deltas with a time stamp $SC_1$ from its local clock. This time stamp reflects the time at the moment the packet is generated for transmission of the perceived clock deltas. The period for updating the perceived clock deltas and sending the message can be in the range of a minute. Likewise, the stations P2 and S3 update periodically the own perceived system clock deltas to the local clocks of the other stations in the network and publish them periodically in datagrams $DG_2$ and $DG_3$. When station S3 receives such datagrams, it will first tag the received message with a time stamp generated based on its own local clock SC3. This time stamp reflects the message arrival time for the received datagram. The message will be recorded/archived for later use in the station. Since only the latest such message will be used for the algorithm according the invention, the outdated messages can be discarded each time a new update message has arrived from that station.

It will now be explained how the published perceived system clock deltas will be utilized for solving the problem of the invention in regard to deducing the correct temporal ordering of information items tagged with time information.

**Definition of Symbols**

$SC_x(t)$ = system clock of device x at wall-clock time t  $TT_{x\to y}$ = transmission time for a message between device x and device y. We assume transmission times to be symmetrical, i.e. $TT_{x\to y} = TT_{y\to x}$.

$CD_{x\to y}$ = system clock delta between device x and device y. $CD_{x\to y} = SC_y(t) - SC_x(t)$ for all t. Also, from this definition it follows: $CD_{x\to y} = -CD_{y\to x}$.

$PD_{x\to y}$ = perceived system clock delta between device x and device y. This can be written: $PD_{x\to y} = SC_y(t_{arrival}) - SC_x(t_{departure})$.

**Observation**

Assuming constant system clock deltas (i.e. all system clocks run at the same rate, but at different offsets), which should be the case if the oscillators which are used in the local clocks are of the same type and the stations in the network are positioned in-house at almost the same temperature, and relatively constant and symmetrical transmission times (this is typically true over a certain period of time, though not indefinitely), we can state the following:

$$PD_{x->y} = SC_y(t_{arrival}) - SC_x(t_{departure})$$

$$= SC_y(t_{departure} + TT_{x->y}) - SC_x(t_{departure})$$

$$= TT_{x->y} + (SC_y(t_{departure}) - SC_x(t_{departure}))$$

$$= TT_{x->y} + CD_{x->y}$$

In words: the perceived system clock delta between any two systems is the sum of the transmission delay between the two systems, and the actual system clock delta between the two systems.
From this follows, that we can derive the transmission time $TT_{x \to y}$ and real clock delta $CD_{x \to y}$ between any two devices if we know $PD_{x \to y}$ and $PD_{y \to x}$.

$$(1) \qquad PD_{x->y} = TT_{x->y} + CD_{x->y}$$

$$(2) \qquad PD_{y->x} = TT_{y->x} + CD_{y->x}$$

$$=>$$

$$((1)+(2)) \quad PD_{x->y} + PD_{y->x} = TT_{x->y} + CD_{x->y} + TT_{y->x} + CD_{y->x}$$

$$= TT_{x->y} + CD_{x->y} + TT_{x->y} - CD_{x->y}$$

$$= 2*TT_{x->y}$$

$$=>$$

$$(3) \quad \mathbf{TT_{x->y} = (PD_{x->y} + PD_{y->x}) / 2}$$

and

$$((1) - (2)) \quad PD_{x->y} - PD_{y->x} = TT_{x->y} + CD_{x->y} - TT_{y->x} - CD_{y->x}$$

$$= TT_{x->y} + CD_{x->y} - TT_{x->y} + CD_{x->y}$$

$$= 2*CD_{x->y}$$

$$=>$$

$$(4) \quad \mathbf{CD_{x->y} = (PD_{x->y} - PD_{y->x}) / 2}$$

**Algorithm**

As explained above, every device x in the system publishes at regular time intervals (say, every minute) the following information:

- Its own system clock $SC_x(t)$
- The perceived deltas it has observed with respect to other devices y in the network $PD_{y \rightarrow x}$

The perceived delta $PD_{x \rightarrow y}$ is determined by looking at the last such periodic update message device y received from device x: and is calculated in the following way:

$$PD_{x \text{->} y} = SC_y(\text{message arrival time}) - SC_x[\text{as published in the received message}].$$

Whenever a program on device x needs to determine $SC_{x \rightarrow y}$ or $TT_{x \rightarrow y}$, it looks up $PD_{y \rightarrow x}$ in the latest message published by device x, and $PD_{x \rightarrow y}$ in the latest message published by device y, and it applies formula (4) or (3) respectively. Here, $SC_{x \text{->} y}$ is the translated system clock time of the transmitting station x when being translated into the system clock time at the destination station y. => $SC_{x \text{->} y} = SC_x + CD_{x \text{->} y}$. The receiving station can use this formula to translate all the time stamps it received from the publishers P1 and P2. Then it is easy to find out the correct temporal ordering of the event messages it received with time stamps.

It will now be explained how the published perceived system clock deltas will be utilized for solving the problem of the invention in regard to determining the transmission delay when sending messages to another station in the network. If one station issues a request to another station to perform an action at a certain point in time, the sender has to be certain that point in time has not passed by at the time the message arrives at its destination. An example for execution of a command is the volume adjustment command sent to a plurality of active loudspeakers in the network. It is important that such commands will be executed in timely fashion by all the loudspeakers in the network because otherwise some of the loudspeakers will adjust volume whereas other loudspeakers do not adjust. That behaviour would be uncomfortable to the user because an audible sound effect with misadjusted volumes of some loudspeakers would result. Therefore, what the sending station will do, is applying formula (3) for determining the transmission delay for the communication to the destination station. Then when building the packet with the command to be performed at the predetermined time in future, it will perform an estimated "late check" where it will be checked if the predetermined command execution time CET is greater than the current system clock time $SC_x$ plus the transmission delay $TT_{x \text{->} y}$ for delivering a message from station x to y. If yes, the prepared message will be sent, otherwise the message will be discarded. If discarded, the sending station would need to generate a new message with an updated command execution time CET so that the command is performed with guarantee.

The invention can be used for all kinds of transmitted data where a clock normally needs to be considered, such as data from various sensors.

In particular, the use of the invention affords advantages where it is necessary to transmit real-time data, that is to say especially multimedia data such as audio or video data streams.

**Claims**

1. A method for exchanging messages comprising time stamp information in a network system, said network system comprising a plurality of network stations (PI, P2, S3) being connected to each other by a communication bus (10), wherein the network stations (PI, P2, S3) are equipped with local clocks (RTC), wherein the messages are tagged with time stamp information from the local clocks (RTC), wherein the time stamp information of a message ($DG_{1b}$, $DG_{1a}$, $DG_{2b}$, $DG_{2a}$) received from a network station (PI, P2) is translated into the clock domain of the local clock (RTC) in the network station ($S_3$) having received the message, **characterized in that,** the network stations (PI, P2, S3) in the network, repeatedly calculate perceived clock delta times ($PD_{x \text{->} y}$) for their own respective local clock (RTC) compared to the local clocks (RTC) of the other network stations, and repeatedly communicate the perceived clock delta times ($PD_{x \text{->} y}$) in an update message ($DG_1$, $DG_{2b}$ $DG_3$) to the other stations in the network and that the network station ($S_3$), which receives a message tagged with time stamp information, translates the time stamp information received in the message into the corresponding time stamp information in its clock domain based on the perceived clock delta time ($PD_{x \rightarrow y}$) received in the latest update message or an earlier update message.

**2.** Method according to claim 1, wherein the network stations also communicate the system clock time ($SC_1$, $SC_2$, $SC_3$) at the point in time the update message ($DG_1$, $DG_{2b}$ $DG_3$) is being generated or sent to the other stations of the network in said update message ($DG_1$, $DG_{2b}$ $DG_3$) and that the station receiving an update message also records the message arrival time for the incoming update messages.

**3.** Method according to claim 2, wherein the network station calculates the perceived clock delta times ($PD_{x \to y}$) for a communication with a network station x by selecting the last update message ($DG_x$) received from the network station x and calculating the perceived clock delta time according to the formula $PD_{x \to y} = SC_y$(message arrival time) - $SC_x$[as published in the received message], wherein $PD_{x \to y}$ is the perceived clock delta time for said communication from network station x to network station y, $SC_y$(message arrival time) is the system clock time of station y at the arrival time of the update message received from network station x and $SC_x$[as published in the received message] is the system clock time of station x as published in the update message received from station x.

**4.** Method according to one of the previous claims, wherein an estimated clock delta time $CD_{x \to y}$ between the local clocks of station x and station y is calculated according to the formula:

$$CD_{x->y} = (PD_{x->y} - PD_{y->x}) / 2$$

wherein $PD_{x->y}$ is the perceived clock delta time for said communication from network station x to network station y and $PD_{y->x}$ is the in network station x perceived clock delta time for a communication to the network station x.

**5.** Method according to claim 4, wherein the receiving station (S3) translates the time stamp information received from the transmitting station (PI, P2) into the clock domain of the receiving station (S3) by applying the formula: $SC_{x->y}$ = $SC_x + CD_{x \to y}$, where $SC_{x->y}$ is the translated time stamp information in the clock domain of the receiving station (S3), $SC_x$ is the time stamp information to be translated received from the transmitting station (P1,P2), and $CD_{x \to y}$ is the estimated clock delta time between the clock in the transmitting station (PI, P2) and the clock in the receiving station (S3).

**6.** Method according to one of the previous claims, wherein an estimated transmission delay $TT_{x \to y}$ for delivering a message from the transmitting station (PI, P2) to the receiving station (S3), is calculated according to the formula:

$$TT_{x->y} = (PD_{x->y} + PD_{y->x}) / 2,$$

wherein $PD_{x->y}$ is the perceived clock delta time for said communication from network station x to network station y and $PD_{y->x}$ is the in network station x perceived clock delta time for a communication to the network station x.

**7.** Method according to claim 6, wherein the transmitting station (PI, P2) sending a command to be executed by the receiving station (S3) at the command execution time which is indicated in the message performs an estimated late check before sending the message in the form of checking if the predetermined command execution time CET is greater than the current system clock time $SC_x$ of the transmitting station plus the estimated transmission delay $TT_{x->y}$ for delivering a message from the transmitting station (PI, P2) to the receiving station (S3), wherein the sending of the command is approved in the estimated late check if it is determined that the command execution time is greater than the current system clock time $SC_x$ of the transmitting station plus the estimated transmission delay $TT_{x->y}$, and wherein the sending of the command is disapproved in the estimated late check if it is determined that the command execution time is smaller or equal than the current system clock time $SC_x$ of the transmitting station plus the estimated transmission delay $TT_{x->y}$.

**8.** Method according to one of the previous claims, wherein the repeated calculation of the perceived clock delta times ($PD_{x->y}$) and the repeated communication of the update message ($DG_1$, $DG_{2b}$ $DG_3$) occurs periodically with a time period of approximately one minute.

**9.** Apparatus adapted to be used in the method according to one of the previous claims, comprising a local clock (RTC), a communication bus interface (IF) for exchanging messages with other stations (PI, P2) in the network, **characterized by,** a processor (MP) which repeatedly calculates the perceived clock delta times ($PD_{x->y}$) for its own local clock (RTC) compared to the local clocks (RTC) of the other network stations (PI, P2), and wherein the communication bus interface (IF) repeatedly communicates the perceived clock delta times ($PD_{x \rightarrow y}$) in an update message ($PD_{x \rightarrow y}$) to the other stations (PI, P2) in the network and wherein the processor (MP) translates the time stamp information received in a message ($DG_{1b}$, $DG_{1a}$, $DG_{2b}$, $DG_{2a}$) from another station (PI, P2) in the network into the corresponding time stamp information in the clock domain of the own local clock (RTC) based on the perceived clock delta time ($PD_{x->y}$) received in the latest update message or an earlier update message from that station in the network.

10. Apparatus according to claim 9, wherein the communication bus interface (IF) also publishes the system clock time ($SC_1$, $SC_2$, $SC_3$) at the point in time the update message ($DG_1$, $DG_2$, $DG_3$) is being generated or sent to the other stations of the network in said update message ($DG_1$, $DG_2$, $DG_3$) and wherein the processor (MP) also records the message arrival time for the received messages communicating the perceived clock delta times ($PD_{x->y}$) and the system clock time ($SC_1$ - $SC_3$) in a memory (MEM).

11. Apparatus according to claim 10, wherein the processor (MP) calculates the perceived clock delta times ($PD_{x \rightarrow y}$) for a communication with a network station x by selecting the last update message ($DG_x$) received from the network station x and calculating the perceived clock delta times according to the formula $PD_{x \rightarrow y} = SC_y$(message arrival time) - $SC_x$[as published in the received message], wherein $PD_{x->y}$ is the perceived clock delta time for said communication from the network station x to the apparatus, $SC_y$(message arrival time) is the local clock time of the apparatus at the arrival time of the update message received from station y and $SC_x$[as published in the received message] is the system clock time of station x as published in the update message received from station x.

12. Apparatus according to claim 11, wherein the processor (MP) calculates an estimated clock delta time $CD_{x->y}$ between the local clocks of station x and station y according to the formula:

$$CD_{x->y} \; = \; (PD_{x->y} \; - \; PD_{y->x}) \; / \; 2$$

wherein $PD_{x->y}$ is the perceived clock delta time for said communication from network station x to network station y and $PD_{y->x}$ is the in network x perceived clock delta time for a communication to the network station x.

13. Apparatus according to claim 12, wherein the processor (MP) translates the time stamp information received in the message ($DG_{1b}$, $DG_{1a}$, $DG_{2b}$, $DG_{2a}$) from a transmitting station (PI, P2) into the corresponding time stamp information in the clock domain of its own local clock (RTC) using the formula:

$$SC_{x->y} \; = \; SC_x \; + \; CD_{x->y}$$

where $SC_{x->y}$ is the translated time stamp information into the clock domain of the receiving station y, $SC_x$ is the received time stamp value to be translated and $CD_{x->y}$ is the estimated clock delta time between the local clock in the transmitting station (PI, P2) and the local clock in the receiving station (S3).

14. Apparatus according to one of claims 9 to 13, wherein the processor (MP) calculates an estimated transmission delay $TT_{x \rightarrow y}$ for delivering a message from the apparatus to the receiving station (S3), according to the formula:

$$TT_{x->y} \; = \; (PD_{x->y} \; + \; PD_{y->x}) \; / \; 2,$$

wherein $PD_{x->y}$ is the perceived clock delta time for said communication from the apparatus to the receiving station (S3), and $PD_{y->x}$ is the in the receiving network station (S3) perceived clock delta time for a communication to the apparatus.

15. Apparatus according to claim 14, wherein the processor (MP) for sending a command to be executed by the receiving station (S3) at a predetermined command execution time CET which is indicated in the message performs an estimated late check before sending the message in the form of checking if the predetermined command execution time CET is greater than the current system clock time $SC_x$ of the apparatus plus the estimated transmission delay $TT_{x->y}$, wherein the sending of the command is approved in the estimated late check if it is determined that the command execution time is greater than the current system clock time $SC_x$ of the apparatus plus the estimated transmission delay $TT_{x->y}$, and wherein the sending of the command is disapproved in the estimated late check if it is determined that the command execution time is smaller or equal than the current system clock time $SC_x$ of the apparatus plus the estimated transmission delay $TT_{x->y}$.

16. Apparatus according to one of the claims 9 to 15, wherein the processor performs the repeated calculation of the perceived clock delta times ($PD_{x->y}$) periodically with a time period of approximately one minute and wherein the communication interface (IF) performs the repeated communication of the update message ($DG_1$, $DG_{2b}$ $DG_3$) periodically with a time period of approximately one minute.

**Fig. 1**

EP 2 993 816 A1

**Problem 2: time stamp translation**
How can I translate $t_{1a}$ from publisher 1 into the equivalent time stamp for subscriber 3?

**Problem 1: temporal ordering**
What is the real temporal order of events coming from publisher 1 and publisher 2?

Wall Clock (reference time) WC(t)

WCT

Publisher 1
$SC_1(t) = WC(t) + \Delta_1$

P1

$DG_{1b}$ $T=t_{1b}$

$DG_{1a}$ $T=t_{1a}$

Subscriber 3
$SC_3(t) = WC(t) + \Delta_3$

S3

$DG_{2a}$ $T=t_{2a}$

$DG_{2b}$ $T=t_{2b}$

Publisher 2
$SC_2(t) = WC(t) + \Delta_2$

P2

**Possible temporal orderings:**

| | | | | | |
|---|---|---|---|---|---|
| $T = t_{1a}$ | $T = t_{1a}$ | $T = t_{2a}$ | $T = t_{2a}$ | $T = t_{2a}$ | $T = t_{2a}$ |
| $T = t_{1b}$ | $T = t_{2a}$ | $T = t_{2b}$ | $T = t_{1a}$ | $T = t_{1a}$ | $T = t_{1a}$ |
| $T = t_{2a}$ | $T = t_{1b}$ | $T = t_{1a}$ | $T = t_{2b}$ | $T = t_{2b}$ | $T = t_{1b}$ |
| $T = t_{2b}$ | $T = t_{2b}$ | $T = t_{1b}$ | $T = t_{1b}$ | $T = t_{1b}$ | $T = t_{2b}$ |

$t$

**Fig. 2**

Fig. 3

Europäisches
Patentamt
European
Patent Office
Office européen
des brevets

**EUROPEAN SEARCH REPORT**

Application Number

EP 14 30 6357

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2007/094528 A1 (FREDRIKSSON LARS-BERNO [SE] ET AL) 26 April 2007 (2007-04-26) * abstract; figures 1,5 * * paragraphs [0003], [0004] * * paragraph [0031] - paragraph [0034] * * paragraph [0066] - paragraph [0071] * | 1-6, 8-14,16 | INV. H04J3/06 ADD. H04L12/40 |
| Y | US 2006/083265 A1 (JORDAN PATRICK D [US] ET AL) 20 April 2006 (2006-04-20) * figure 3 * * paragraphs [0006], [0017], [0021] * * paragraph [0025] - paragraph [0036] * | 1-6, 8-14,16 | |
| A | SHIKYU BAE ET AL: "A Multimedia Synchronization Protocol For High Speed Networks", ARCHITECTURE AND IMPLEMENTATION OF HIGH PERFORMANCE COMMUNICATION SUBSYSTEMS, 1995. (HPCS '95), 1995 THIRD IEEE WORKSHOP ON THE, IEEE, 23 August 1995 (1995-08-23), pages 129-136, XP032307123, DOI: 10.1109/HPCS.1995.662017 * abstract; figures 3,7 * * page 130, right-hand column, paragraph 5 * * page 131, left-hand column, paragraph 2 - page 132, left-hand column, paragraph 1 * * page 133, left-hand column, line 3 - page 134, right-hand column, line 2 * | 7,15 | TECHNICAL FIELDS SEARCHED (IPC) G06F H04L H04J |

The present search report has been drawn up for all claims

| Place of search | Date of completion of the search | Examiner |
|---|---|---|
| The Hague | 11 February 2015 | Pieper, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 993 816 A1**

## ANNEX TO THE EUROPEAN SEARCH REPORT
## ON EUROPEAN PATENT APPLICATION NO.

EP 14 30 6357

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2015

| Patent document cited in search report | | Publication date | Patent family member(s) | | Publication date |
|---|---|---|---|---|---|
| US 2007094528 | A1 | 26-04-2007 | AT | 538563 T | 15-01-2012 |
| | | | EP | 1741241 A1 | 10-01-2007 |
| | | | SE | 0401130 A | 31-10-2005 |
| | | | US | 2007094528 A1 | 26-04-2007 |
| | | | US | 2012109453 A1 | 03-05-2012 |
| | | | WO | 2005107174 A1 | 10-11-2005 |
| US 2006083265 | A1 | 20-04-2006 | NONE | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8630316 B2